# EUROPEAN PATENT SPECIFICATION

(11) **EP 3 718 799 B1**
(45) Date of publication and mention of the grant of the patent: **22.06.2022**
(21) Application number: 19774357.8
(22) Date of filing: 14.03.2019
(51) Int. Cl.: B60H 1/00, B60H 1/32, F04D 29/28, F04D 29/70, F04D 29/26, F04D 29/42, F04D 29/22

(54) **BLOWER DEVICE FOR AIR-CONDITIONING OF VEHICLE**
GEBLÄSEVORRICHTUNG ZUR KLIMATISIERUNG EINES FAHRZEUGS
DISPOSITIF DE SOUFFLANTE DESTINÉ À LA CLIMATISATION D'UN VÉHICULE

(30) Priority: 27.03.2018 JP 2018060362
(43) Date of publication of application: 07.10.2020
(73) Proprietor: Japan Climate Systems Corporation, Higashihiroshima-shi, Hiroshima 739-0153 (JP)
(72) Inventor: YONEHARA, Shinji, Higashihiroshima-shi, Hiroshima 739-0153 (JP); HAKATA, Toshiki, Higashihiroshima-shi, Hiroshima 739-0153 (JP); TANAKA, Takeshi, Higashihiroshima-shi, Hiroshima 739-0153 (JP); SETOUCHI, Naoto, Higashihiroshima-shi, Hiroshima 739-0153 (JP)
(74) Representative: Germain Maureau
(86) International application number: PCT/JP2019/010653
(87) International publication number: WO 2019/188363

(56) References cited:
- EP-A2- 2 381 110
- WO-A1-2017/163631
- WO-A1-2017/163631
- DE-A1-102012 201 712
- JP-A- 2009 191 759
- JP-A- 2015 183 578
- JP-A- 2017 144 757
- JP-A- 2017 159 818
- JP-U- H0 565 623
- US-A1- 2008 253 879

## Description

### TECHNICAL FIELD

The present invention relates to vehicle air-conditioning air blowers each mounted on an automobile, for example, to blow air-conditioning air, and more particularly relates to a structure that drives a blower fan through a motor disposed below the blower fan.

### BACKGROUND ART

Typically, an air conditioner mounted on a vehicle selects either air inside a cabin (inside air) or air outside the cabin (outside air) to blow the selected air as air-conditioning air, and the blown air has its temperature controlled by a cooling heat exchanger and a heating heat exchanger, and is then fed to areas inside the cabin.

Recently commercialized vehicle air-conditioning air blowers for blowing air-conditioning air include a device that is switchable among not only an inside-air circulation mode in which only the inside air is blown, and an outside-air introduction mode in which only the outside air is blown, but also an inside-outside air double flow mode in which both inside air and outside air are blown. That is to say, as disclosed in JP2000-296710, JP2001-206044, JP2011-201501 or JP2015-67260, a casing of a vehicle air-conditioning air blower has an inside air inlet, an outside air inlet, an upper air passage, and a lower air passage. The upper and lower air passages each include therein a blower fan. These two blower fans are driven by a common motor. The casing is provided with inside/outside air switching dampers for opening and closing the inside air inlet and the outside air inlet. The inside/outside air switching dampers allow switching to be made among the inside-air circulation mode in which only the inside air inlet is opened, the outside-air introduction mode in which only the outside air inlet is opened, and the inside-outside air double flow mode in which the inside air inlet and the outside air inlet are both opened. If the two blower fans are rotated, and the inside-air circulation mode is selected, the inside air introduced through the inside air inlet flows through the upper and lower air passages. Alternatively, if the outside-air introduction mode is selected, the outside air introduced through the outside air inlet flows through the upper and lower air passages. Still alternatively, if the inside-outside air double flow mode is selected, the outside air introduced through the outside air inlet flows through the upper air passage, and the inside air introduced through the inside air inlet flows through the lower air passage.

A vehicle air-conditioning air blower of JP2015-67260 includes a scroll casing housing a blower fan. The scroll casing includes an upper scroll casing and a lower scroll casing. An upper portion of the lower scroll casing is fitted into a lower portion of the lower scroll casing, thereby integrating the upper and lower scroll casings together.

The scroll casing includes therein a partition plate extending horizontally through a vertically intermediate portion of the scroll casing. The partition plate partitions the interior of the scroll casing into upper and lower air passages. A peripheral portion of the partition plate is vertically sandwiched between the lower portion of the upper scroll casing and the upper portion of the lower scroll casing.

### CITATION LIST

WO 2017/163631 discloses a blower device for air-conditioning of vehicle comprising drainage holes on a peripheral wall surrounding the output shaft of the motor. EP 2381110 and JP 2015-183578 disclose blower devices wherein drainage holes are provided on the main plate of the single-blade fans.

### SUMMARY OF THE invention

### TECHNICAL PROBLEM

The blower fan has a fixed portion to be fixed to a rotation shaft of the motor, and a portion called a cone portion extending from the fixed portion to its surrounding blades. The cone portion may be recessed downward. Specifically, the motor having a long rotation shaft is less likely to be reliably stable while rotating. Thus, there is a need to shorten the rotation shaft. To shorten the rotation shaft, the fixed portion of the blower fan needs to be positioned at a lower position. On the other hand, the positions of the blades are determined by the position of the scroll casing. Thus, to shorten the rotation shaft of the motor, a central portion of the cone portion needs to be positioned below an outer peripheral portion of the cone portion. Thus, a need arises to position the fixed portion at a lower position.

However, if the cone portion is recessed downward as described above, rainwater or car-washing water entering the scroll casing through the outside air inlet, for example, may be accumulated on a recessed upper surface of the cone portion. This water may cause a malfunction.

In view of the foregoing background, it is therefore an object of the present invention to eliminate or reduce water accumulated on a cone portion to reduce malfunctions.

### SOLUTION TO THE PROBLEM

In order to achieve the foregoing object, in the present invention, the lowest portion of a cone portion has a drainage hole. This allows water accumulated on an upper surface of the cone portion to be drained downward of the cone portion.

The invention is defined by claim 1. and is directed to a vehicle air-conditioning air blower. The vehicle air-conditioning air blower includes: a casing having an inside air inlet through which air in a cabin is introduced into the casing, and an outside air inlet through which air outside the cabin is introduced into the casing, the casing housing an inside/outside air switching damper that opens and closes the inside air inlet and the outside air inlet; a blower fan disposed in the casing; and a motor including a rotation shaft extending in a top-to-bottom direction. The blower fan is disposed above the motor. The blower fan includes a fixed portion fixed to the rotation shaft, a cone portion extending from the fixed portion in a radial direction of the rotation shaft, and at least one blade fixed to a radially outer surface of the cone portion. The cone portion is recessed downward. A lowest portion of the cone portion has a drainage hole through which water on an upper surface of the cone portion is drained downward of the cone portion.

This configuration allows rainwater or car-washing water, for example, entering the interior of the casing through the outside air inlet to reach the upper surface of the cone portion, which has the drainage hole, to be drained downward of the cone portion through the drainage hole. Thus, the water accumulated on the upper surface of the cone portion is less likely to remain. Specifically, the water that has reached the upper surface of the cone portion flows toward the lowest portion of the cone portion. However, since the lowest portion of the cone portion has the drainage hole, the water on the upper surface of the cone portion is easily drained.

Accordingly, a cone portion has the lowest portion having a drainage hole through which water on an upper surface of the cone portion is drained downward of the cone portion. This makes it difficult for water accumulated on the upper surface of the cone portion to remain, and can thus reduce malfunctions

The cone portion is inclined downward toward a lower edge portion of the drainage hole.

This configuration allows water on the upper surface of the cone portion to flow toward the lower edge portion of the drainage hole.

Accordingly, the water on the upper surface of the cone portion can flow toward the drainage hole.

The casing has therein first and second air passages each communicating with both of the inside air inlet and the outside air inlet, the blower fan includes the at least one blade including a first blade disposed in the first air passage, and a second blade disposed in the second air passage, the first blade being used to send air in the first air passage as air-conditioning air, the second blade being used to send air in the second air passage as air-conditioning air, and the first and second blades are coupled to the cone portion.

With this configuration, if an operation of the inside/outside air switching damper allows the inside air inlet to open, and allows the outside air inlet to close, the vehicle air-conditioning air blower operates in the inside-air circulation mode in which inside air is introduced through the inside air inlet thereinto. In the inside-air circulation mode, the blower fan rotating allows the inside air introduced through the inside air inlet to flow through the first and second air passages and to be then sent as air-conditioning air. If an operation of the inside/outside air switching damper allows the inside air inlet to close, and allows the outside air inlet to open, the vehicle air-conditioning air blower operates in the outside-air introduction mode in which outside air is introduced through the outside air inlet thereinto. In the outside-air introduction mode, the blower fan rotating allows the outside air introduced through the outside air inlet to flow through the first and second air passages and to be then sent as air-conditioning air.

Accordingly, any of an outside-air introduction mode, an inside-air circulation mode, and an inside-outside air double flow mode can be selected, to send air in the selected mode.

A lower surface of the cone portion may have at least one projection projecting downward from an inner end of the drainage hole in the radial direction of the rotation shaft (not part of the claimed invention).

This configuration makes it easy for water flowing downward from the drainage hole to flow along the projection. Since the projection projects from the inner end of the drainage hole in the radial direction of the rotation shaft, water is less likely to flow in a direction that allows the water to be closer to the rotation shaft. This reduces water entering the motor.

Accordingly, the lower surface of the cone portion is provided with at least one projection that projects downward from the inner end of the drainage hole in a radial direction of a rotation shaft. Thus, water flowing downward from the drainage hole is less likely to flow in a direction that allows the water to be closer to the rotation shaft. This can reduce water entering a motor.

The at least one projection may extend in a circumferential direction of the rotation shaft (not part of the claimed invention).

This configuration makes it difficult for water flowing downward from the drainage hole to flow in the direction that allows the water to be closer to the rotation shaft.

Accordingly, the projection extends in a circumferential direction of the rotation shaft. This can substantially prevent the water flowing downward from the drainage hole from flowing in the direction that allows the water to be closer to the rotation shaft.

The at least one projection may include a plurality of projections arranged at regular intervals in the circumferential direction of the rotation shaft (not part of the claimed invention).

This configuration makes it possible for the blower fan to be highly balanced while rotating.

Accordingly, the projection includes a plurality of projections arranged at regular intervals in the circumferential direction of the rotation shaft. Thus, the blower fan can be highly balanced while rotating.

A lower end surface of the at least one projection may have a width of 1.0 mm or less (not part of the claimed invention).

This configuration makes it possible for water that has reached the lower end surface of the projection to easily drop directly downward.

Accordingly, the width of a lower end surface of the one projection is 1.0 mm or less. This makes it easy for water that has reached the lower end surface of the projection to drop directly downward. This can substantially prevent the water flowing downward from the drainage hole from flowing in the direction that allows the water to be closer to the rotation shaft.

A lower portion of the at least one projection may be pointed downward (not part of the claimed invention).

This configuration makes it possible for water that has reached the lower portion of the projection to easily drop directly downward.

Accordingly, a lower portion of the projection is pointed downward. This makes it easy for water that has reached the lower portion of the projection to drop directly downward. This can substantially prevent the water flowing downward from the drainage hole from flowing in the direction that allows the water to be closer to the rotation shaft.

The at least one projection may extend like an arc concentric with the rotation shaft (not part of the claimed invention).

Accordingly, the projection extends like an arc concentric with the rotation shaft. Thus, the projection can function as an arc-shaped rib. This can increase the rigidity of the cone portion.

The motor may include a body, and a cover that covers the body from above, the rotation shaft may pass through the cover to protrude upward from an upper end of the body, the cover may have a cylindrical portion surrounding the rotation shaft, and the drainage hole may be apart upward from an upper end of the cylindrical portion, and may be positioned radially outward of the cylindrical portion.

With this configuration, if the body of the motor is covered with the cover, the drainage hole is located radially outward of the cylindrical portion of the cover. Thus, water dropped from the drainage hole flows outside the cylindrical portion. This reduces water entering the body.

Accordingly, water dropped from the drainage hole can be substantially prevented from entering a body of the motor.

The cone portion may be provided with a rib extending in the radial direction of the rotation shaft, and the rib may cross the drainage hole.

This configuration reduces the degree to which the rigidity of the cone portion having the drainage hole decreases.

Accordingly, the degree to which the rigidity of the cone portion having the drainage hole decreases can be reduced.

Further, if the inside air inlet and the outside air inlet are opened by an operation of the inside/outside air switching damper, the vehicle air-conditioning air blower operates in the inside-outside air double flow mode to rotate the blower fan. With the rotation, the outside air introduced through the outside air inlet flows through one of the first and second air passages, and the inside air introduced through the inside air inlet flows through the other air passage. Thus, a combination of the outside air and the inside air is sent as air-conditioning air.

### BRIEF DESCRIPTION OF THE DRAWINGS

[FIG. 1] FIG. 1 is a back view of a vehicle air-conditioning air blower according to an embodiment of the present invention.
[FIG. 2] FIG. 2 is a left side view of the vehicle air-conditioning air blower.
[FIG. 3] FIG. 3 is a bottom view of the vehicle air-conditioning air blower.
[FIG. 4] FIG. 4 is a cross-sectional view taken along line IV-IV shown in FIG. 1.
[FIG. 5] FIG. 5 is a plan view of a blower fan.
[FIG. 6] FIG. 6 is a cross-sectional view taken along line VI-VI shown in FIG. 5.
[FIG. 7] FIG. 7 is a bottom view of the blower fan.
[FIG. 8] FIG. 8 is a view corresponding to FIG. 6, illustrating a first variation of the embodiment (not part of the claimed invention).
[FIG. 9] FIG. 9 is a view corresponding to FIG. 7, illustrating the first variation of the embodiment (not part of the claimed invention).
[FIG. 10] FIG. 10A is an enlarged view of a portion A of FIG. 8, FIG. 10B is a view corresponding to FIG. 10A, illustrating a second variation, and FIG. 10C is a view corresponding to FIG. 10A, illustrating a third variation (not part of the claimed invention).
[FIG. 11] FIG. 11 is a view corresponding to FIG. 7, illustrating a fourth variation of the embodiment (not part of the claimed invention).
[FIG. 12] FIG. 12 is a view corresponding to FIG. 7, illustrating a fifth variation of the embodiment (not part of the claimed invention).
[FIG. 13] FIG. 13 is a view corresponding to FIG. 6, illustrating a sixth variation of the embodiment (not part of the claimed invention).

### DESCRIPTION OF EMBODIMENTS

Embodiments of the present invention will now be described in detail with reference to the drawings. The following description of preferred embodiments is only an example in nature, and is not intended to limit the scope, applications, or use of the present invention.

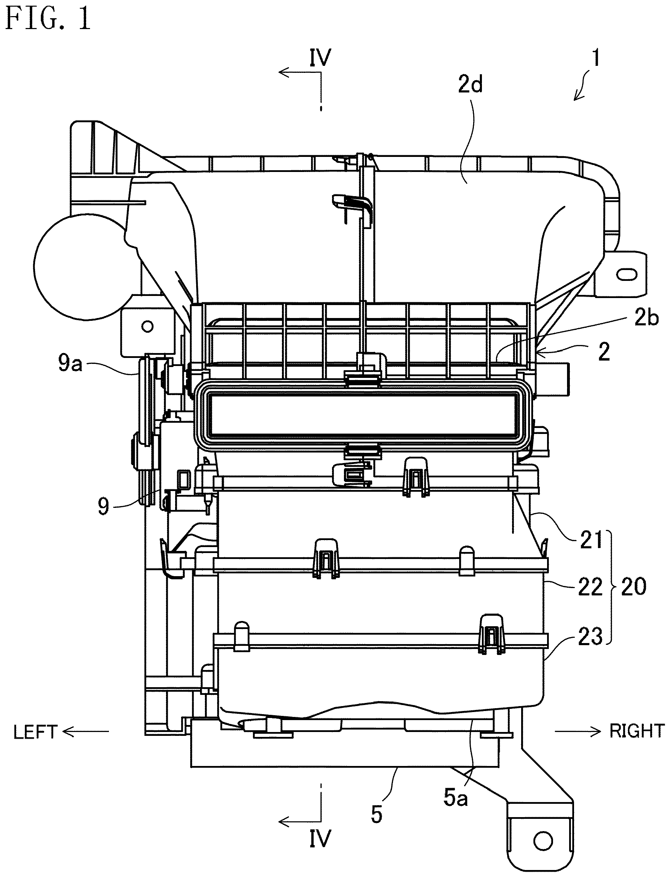

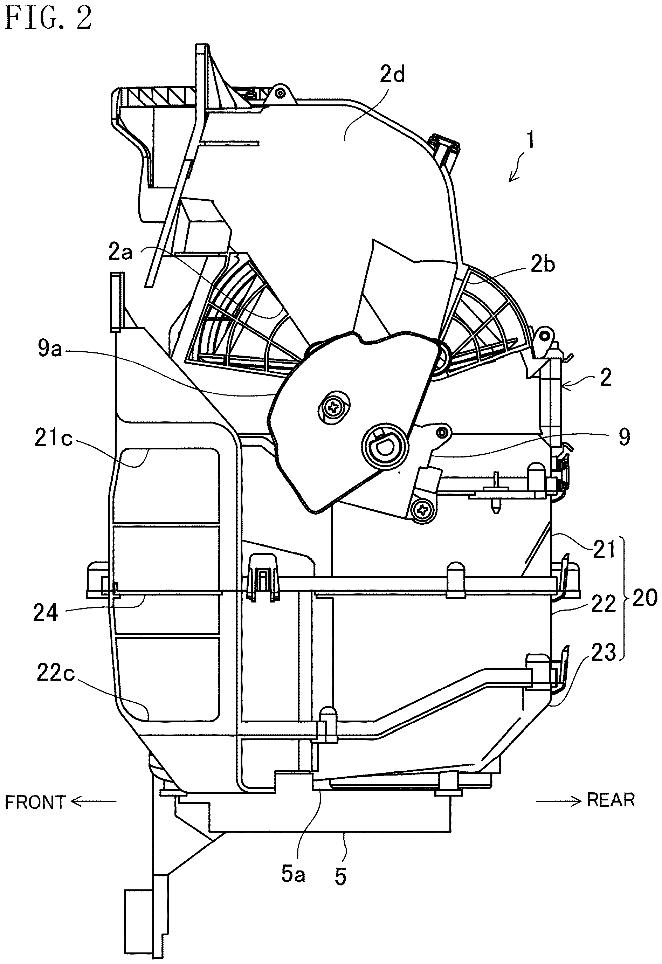

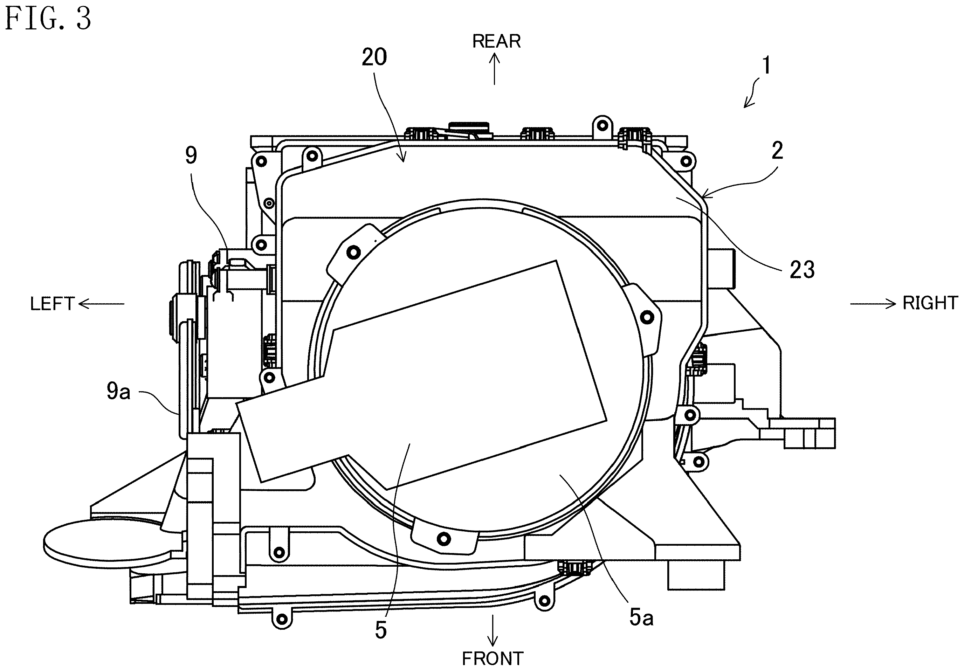

FIG. 1 illustrates a vehicle air-conditioning air blower 1 according to an embodiment of the present invention, as viewed from the rear side of a vehicle. FIG. 2 illustrates the vehicle air-conditioning air blower 1, as viewed from the left side of the vehicle. FIG. 3 illustrates the vehicle air-conditioning air blower 1, as viewed from the lower side of the vehicle. This vehicle air-conditioning air blower 1 is disposed in, for example, a cabin of an automobile to blow air-conditioning air, and forms a vehicle air conditioner together with an air conditioning unit (not shown) and a refrigeration cycle system.

The air conditioning unit includes, for example, a cooling heat exchanger serving as an evaporator of a refrigeration cycle, a heating heat exchanger serving as a heater core, an air mixing damper, a blowing direction switching damper, and an air-conditioning casing housing these components. Air-conditioning air blown from the vehicle air-conditioning air blower 1 is introduced into the air-conditioning casing, and passes through the cooling heat exchanger and the heating heat exchanger to generate air-conditioned wind having an intended temperature. Then, the air-conditioned wind is fed to areas inside the cabin in accordance with a blowout mode selected by the blowing direction switching damper. The temperature of the air-conditioned wind is adjusted by the amount of air which passes through the heating heat exchanger which is determined by the air mixing damper.

In the following description of this embodiment, the front, rear, left, and right sides of the vehicle will be simply referred to as the "front," "rear," "left," and "right," respectively. These definitions are merely prepared for easy understanding, and do not limit how the vehicle air-conditioning air blower is actually used, how the vehicle air-conditioning air blower is actually installed, and how the vehicle air-conditioning air blower is actually assembled.

The vehicle air-conditioning air blower 1 is housed in an instrument panel (not shown) arranged in a front end portion of the cabin of the vehicle together with the air conditioning unit. The air conditioning unit is disposed in a substantially laterally central portion of the interior of the instrument panel, while the vehicle air-conditioning air blower 1 is disposed inside the instrument panel on the passenger's side of the air conditioning unit (on the left side of the air conditioning unit in the case of a right-hand drive vehicle, or on the right side thereof in the case of a left-hand drive vehicle). This embodiment illustrates a situation where the vehicle air-conditioning air blower 1 is disposed in a right portion of the vehicle. However, if a vehicle air-conditioning air blower 1 is disposed in a left portion of the vehicle, this vehicle air-conditioning air blower 1 has a structure bilaterally symmetrical to that of the vehicle air-conditioning air blower 1 according to this embodiment. Thus, this situation will not be described in detail.

### (Configuration of Vehicle)

Although not shown, the vehicle including the vehicle air-conditioning air blower 1 includes a dashboard (a partition member) for separating an engine compartment and the cabin from each other. The engine compartment is formed in a front portion of the vehicle, and includes an engine, a transmission, and other components. The dashboard extends in a substantially top-to-bottom direction. A cowl extending in a lateral direction is disposed on an upper portion of the dashboard. The cowl has a communication port communicating with the outside of the cabin. The cowl is disposed outside the cabin,. Thus, rainwater, car-washing water, snow, and any other substances may enter the cowl.

### (Configuration of Vehicle Air-Conditioning Air Blower)

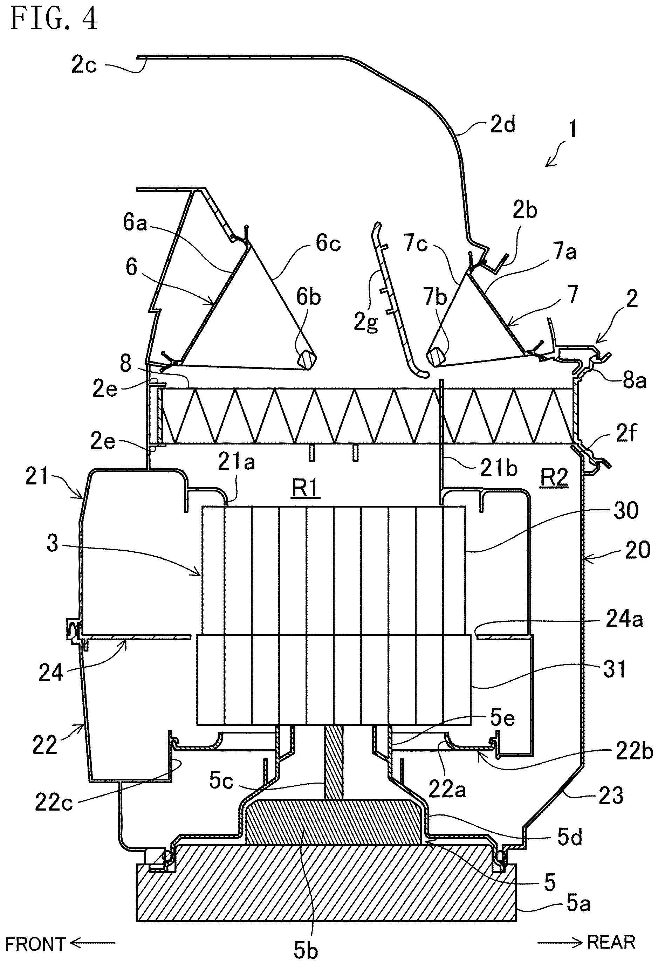

As shown also in FIG. 4, the vehicle air-conditioning air blower 1 includes a blowing casing 2, a blower fan 3, a motor 5 for rotationally driving the blower fan 3, a first inside/outside air switching damper 6, a second inside/outside air switching damper 7, an air filter 8, and an inside/outside air switching actuator 9 (illustrated in FIGS. 1 and 2). The blower fan 3, the first and second inside/outside air switching dampers 6 and 7, and the air filter 8 are housed in the blowing casing 2.

An upper portion of the blowing casing 2 has front and rear inside air inlets 2a and 2b illustrated in FIG. 2 and other figures, and an outside air inlet 2c illustrated in FIG. 4. As illustrated in FIG. 2, the front inside air inlet 2a is formed through a portion of the upper portion of the blowing casing 2 closer to the front end of the blowing casing 2 than a central portion thereof in the front-to-rear direction, and opens to the interior of the cabin. The rear inside air inlet 2b is formed through a portion of the upper portion of the blowing casing 2 closer to the rear end of the blowing casing 2 than the central portion thereof in the front-to-rear direction, and opens to the interior of the cabin. Air in the cabin (inside air) can be introduced into the blowing casing 2 through the front and rear inside air inlets 2a and 2b.

As illustrated in FIG. 4, the upper portion of the blowing casing 2 has an outside air inlet duct portion 2d integrated with the blowing casing 2 to bulge upward from a portion of the blowing casing 2 between the front and rear inside air inlets 2a and 2b. An upper portion of the outside air inlet duct portion 2d extends forward. The outside air inlet 2c opens through a front end of the outside air inlet duct portion 2d. The outside air inlet duct portion 2d is connected to the cowl. The outside air inlet 2c communicates with the outside of the cabin through the cowl. Air outside the cabin (outside air) can be introduced into the blowing casing 2 through the outside air inlet 2c.

As illustrated in FIG. 4, the filter 8 is housed in a portion of the interior of the blowing casing 2 below the front and rear inside air inlets 2a and 2b and the outside air inlet 2c. The filter 8 is formed in the shape of a plate, and extends horizontally. A peripheral portion of the filter 8 is supported by filter support portions 2e provided inside the blowing casing 2. A rear wall portion of the blowing casing 2 has a filter insertion hole 2f through which the filter 8 is to be inserted into the blowing casing 2. The filter insertion hole 2f is closed by a lid portion 8a provided for a rear end portion of the filter 8. Note that the filter 8 may be made of, for example, a commonly-used nonwoven fabric.

A partition wall portion 2g is provided above the filter 8 inside the blowing casing 2. The partition wall portion 2g extends in the top-to-bottom direction, and is slightly inclined rearward toward its lower end portion. An upper portion of the interior of the blowing casing 2 has a first air passage R1 in front of the partition wall portion 2g, and a second air passage R2 behind the partition wall portion 2g. The width of the first air passage R1 in the front-to-rear direction is set to be greater than that of the second air passage R2 in the front-to-rear direction, and the cross-sectional area of the first air passage R1 is larger than that of the second air passage R2.

An upstream end portion (upper end portion) of the first air passage R1 communicates with the front inside air inlet 2a and the outside air inlet 2c. An upstream end portion (upper end portion) of the second air passage R2 communicates with the rear inside air inlet 2b and the outside air inlet 2c. The first and second air passages R1 and R2 communicate with the common outside air inlet 2c, while communicating with the separate inside air inlets 2a and 2b, respectively. This allows inside air and outside air to be introduced into both of the first and second air passages R1 and R2.

The first inside/outside air switching damper 6 is disposed in front of the partition wall portion 2g inside the blowing casing 2, and includes a closing plate portion 6a, a shaft portion 6b, and end plate portions 6c. The closing plate portion 6a extends in the lateral direction. The shaft portion 6b also extends in the lateral direction, and is pivotably supported by both lateral side wall portions of the blowing casing 2. The end plate portions 6c are respectively provided near both lateral ends of the shaft portion 6b. The end plate portions 6c extend radially from the shaft portion 6b, and are respectively arranged adjacent to the lateral end portions of the closing plate portion 6a. The closing plate portion 6a, the shaft portion 6b, and the end plate portions 6c are integrated together. The first inside/outside air switching damper 6 turns around the center line of the shaft portion 6b. This allows switching to be made between the state where the first inside/outside air switching damper 6 has turned forward as illustrated in FIG. 4 and the state where the first inside/outside air switching damper 6 has turned rearward although not shown. If the first inside/outside air switching damper 6 has turned forward, the front inside air inlet 2a is closed, and the outside air inlet 2c is opened. This prevents the inside air from flowing into the blowing casing 2, and allows the outside air to be introduced into the upstream end portion of the first air passage R1. On the other hand, if the first inside/outside air switching damper 6 has turned rearward, the front inside air inlet 2a is opened, and the outside air inlet 2c is closed. This prevents the outside air from flowing into the blowing casing 2, and allows the inside air to be introduced into the upstream end portion of the first air passage R1.

The second inside/outside air switching damper 7 is disposed behind the partition wall portion 2g inside the blowing casing 2, and includes a closing plate portion 7a, a shaft portion 7b, and end plate portions 7c, just like the first inside/outside air switching damper 6. The second inside/outside air switching damper 7 turns around the center line of the shaft portion 7b. This allows switching to be made between the state where the second inside/outside air switching damper 7 has turned rearward as illustrated in FIG. 4 and the state where the second inside/outside air switching damper 7 has turned forward although not shown. If the second inside/outside air switching damper 7 has turned rearward, the rear inside air inlet 2b is closed, and the outside air inlet 2c is opened. This prevents the inside air from flowing into the blowing casing 2, and allows the outside air to be introduced into the upstream end portion of the second air passage R2. On the other hand, if the second inside/outside air switching damper 7 has turned forward, the rear inside air inlet 2b is opened, and the outside air inlet 2c is closed. This prevents the outside air from flowing into the blowing casing 2, and allows the inside air to be introduced into the upstream end portion of the second air passage R2.

The first and second inside/outside air switching dampers 6 and 7 are driven by the inside/outside air switching actuator 9 illustrated in FIGS. 1, 2, and other figures. Although not shown, the inside/outside air switching actuator 9 is controlled by an air-conditioning control apparatus. A link member 9a engages with the shaft portion 6b of the first inside/outside air switching damper 6 and the shaft portion 7b of the second inside/outside air switching damper 7, and is turned by the inside/outside air switching actuator 9 to allow the first and second inside/outside air switching dampers 6 and 7 to work together. Since a well-known technique can be used for the structure in which the first and second inside/outside air switching dampers 6 and 7 work together using the link member 9a, the structure will not be described in detail. Further, the first and second inside/outside air switching dampers 6 and 7 may be separately driven without using the link member 9a.

In this embodiment, the first and second inside/outside air switching dampers 6 and 7 are driven as follows. Specifically, as illustrated in FIG. 4, an optional one of three modes, i.e., an outside-air introduction mode, an inside-air circulation mode, and an inside-outside air double flow mode, can be selected. In the outside-air introduction mode, the first inside/outside air switching damper 6 is turned forward, and the second inside/outside air switching damper 7 is turned rearward. In the inside-air circulation mode, the first inside/outside air switching damper 6 is turned rearward, and the second inside/outside air switching damper 7 is turned forward. In the inside/outside-air double flow mode, the first inside/outside air switching damper 6 is turned forward, and the second inside/outside air switching damper 7 is turned forward.

In the outside-air introduction mode, since the first inside/outside air switching damper 6 turns forward, and the second inside/outside air switching damper 7 turns rearward, only outside air is introduced into the first and second air passages R1 and R2. In the inside-air circulation mode, since the first inside/outside air switching damper 6 turns rearward, and the second inside/outside air switching damper 7 turns forward, only inside air is introduced into the first and second air passages R1 and R2. In the inside-outside air double flow mode, since the first inside/outside air switching damper 6 turns forward, and the second inside/outside air switching damper 7 turns forward, outside air is introduced into the first air passage R1, and inside air is introduced into the second air passage R2. The inside-outside air double flow mode is used during heating.

Switching is made among the inside-air circulation mode, the outside-air introduction mode, and the inside-outside air double flow mode by a well-known automatic air-conditioning control technique. Selecting the inside-outside air double flow mode allows outside air, which is relatively dry in winter, to be fed to a defrost outlet to successfully defog a windshield glass, and allows relatively warm inside air to be fed to a heat outlet to improve heating efficiency.

A scroll casing 20 housing the blower fan 3 is provided below the inside air inlets 2a and 2b and the outside air inlet 2c of the blowing casing 2. As illustrated in FIGS. 1 and 2, the scroll casing 20 is divided into an upper scroll casing 21 in which a portion of the blower fan 3 provided with upper blades (first blades) 30 is housed, and a lower scroll casing 22 in which a portion of the blower fan 3 provided with lower blades (second blades) 31 is housed. A lower portion of the upper scroll casing 21 and an upper portion of the lower scroll casing 22 are fitted to each other, thereby integrating the upper and lower scroll casings 21 and 22 together. The upper and lower blades 30 and 31 may also be referred to as "blades."

A bottom wall member 23 is provided for a lower portion of the scroll casing 20. The bottom wall member 23 is a component of the scroll casing 20. The upper scroll casing 21, the lower scroll casing 22, and the bottom wall member 23 form the scroll casing 20. Further, a partition plate 24 that partitions the interior of the scroll casing 20 into upper and lower spaces is disposed inside the scroll casing 20, and is also a component of the scroll casing 20. The partition plate 24 has a through hole 24a.

An upper wall portion of the upper scroll casing 21 has a substantially circular first bell mouth orifice 21a that opens to the interior of the blowing casing 2. The first bell mouth orifice 21a faces a lower surface of the filter 8, and communicates with the first air passage R1. Further, the upper wall portion of the upper scroll casing 21 is provided with a protruding wall portion 21b protruding upward. The protruding wall portion 21b is positioned behind the edge of the first bell mouth orifice 21a, and extends in the lateral direction. An upper end of the protruding wall portion 21b reaches an area near the lower end portion of the partition wall portion 2g. The protruding wall portion 21b and the partition wall portion 2g partition a portion of the interior of the blowing casing 2 above the upper scroll casing 21 into front and rear spaces. As a result, the first air passage R1 is formed in front of the protruding wall portion 21b and the partition wall portion 2g, and the second air passage R2 is formed behind the protruding wall portion 21b and the partition wall portion 2g.

The first air passage R1 communicates with the interior of the upper scroll casing 21 through the first bell mouth orifice 21a. The interior of the upper scroll casing 21 serves as a portion of the first air passage R1. A portion of the blowing casing 2 above the partition plate 24 is defined as the first air passage R1. A portion of the blower fan 3 provided with the upper blades 30 is disposed in the first air passage R1 inside the upper scroll casing 21. The blower fan 3 rotating inside the upper scroll casing 21 allows the portion of the blower fan 3 provided with the upper blades 30 to send air in the first air passage R1 as air-conditioning air. In other words, the portion of the blower fan 3 provided with the upper blades 30 is a portion of the blower fan 3 that forms an upper one of air flows.

As illustrated in FIG. 2, a front portion of a left side wall portion of the upper scroll casing 21 has an upper air outlet 21c connected to the air conditioning unit. A downstream end of the first air passage R1 communicates with the upper air outlet 21c, and air in the first air passage R1 is blown out of the upper air outlet 21c to the outside of the upper scroll casing 21.

As illustrated in FIG. 4, the second air passage R2 extends downward through a rear portion of the interior of the upper scroll casing 21, and a lower end portion of the second air passage R2 reaches the bottom wall member 23. A lower wall portion of the lower scroll casing 22 is spaced apart upward from the bottom wall member 23, and the lower end portion of the second air passage R2 is located between the lower wall portion of the lower scroll casing 22 and the bottom wall member 23. The lower wall portion of the lower scroll casing 22 is provided with a bell mouth component 22b having a substantially circular second bell mouth orifice 22a. The second bell mouth orifice 22a faces the bottom wall member 23, and communicates with the lower end portion of the second air passage R2. The second bell mouth orifice 22a is positioned concentrically with the first bell mouth orifice 21a. The bell mouth component 22b is fitted into a peripheral portion of an opening 22c of the lower wall portion of the lower scroll casing 22.

The lower end portion of the second air passage R2 communicates with the interior of the lower scroll casing 22 through the second bell mouth orifice 22a. The interior of the lower scroll casing 22 serves as a portion of the second air passage R2. A portion of the lower scroll casing 22 below the partition plate 24 is defined as a portion of the second air passage R2. A portion of the blower fan 3 provided with the lower blades 31 is disposed in the second air passage R2 inside the lower scroll casing 22. The blower fan 3 rotating allows the portion of the blower fan 3 provided with the lower blades 31 to send air in the second air passage R2 as air-conditioning air. In other words, the portion of the blower fan 3 provided with the lower blades 31 is a portion of the blower fan 3 that forms a lower one of the air flows.

As illustrated in FIG. 2, a front portion of a left side wall portion of the lower scroll casing 22 has a lower air outlet 22c connected to the air conditioning unit. The lower air outlet 22c is located directly below the upper air outlet 21c. A downstream end of the second air passage R2 communicates with the lower air outlet 22c, and air in the second air passage R2 is blown out of the lower air outlet 22c to the outside of the lower scroll casing 22.

The bottom wall member 23 covers a lower end portion of the lower scroll casing 22, and is a cover-like member that covers the lower end portion. A peripheral portion of the bottom wall member 23 is formed to be fitted to a peripheral portion of the lower end portion of the lower scroll casing 22 to prevent air from leaking from the gap between the peripheral portion of the bottom wall member 23 and the peripheral portion of the lower end portion of the lower scroll casing 22.

A motor 5 is attached to the bottom wall member 23 via a motor attachment member 5a. The blower fan 3 is disposed above the motor 5. The motor attachment member 5a is fixed to the bottom wall member 23. The motor 5 is attached to the motor attachment member 5a. The motor 5 includes a body 5b including a rotor and other components, a rotation shaft 5c extending in the top-to-bottom direction, and a cover 5d covering the body 5b from above. The rotation shaft 5c protrudes upward from an upper end of the body 5b, passes through the cover 5d, and further protrudes upward beyond the cover 5d. The rotation shaft 5c is disposed concentrically with the first and second bell mouth orifices 21a and 22a. An upper end portion of the rotation shaft 5c is located above the second bell mouth orifice 22a.

The cover 5d has a cylindrical portion 5e surrounding the rotation shaft 5c. The cylindrical portion 5e may be circular cylindrical, and is disposed concentrically with the rotation shaft 5c. Instead of the cylindrical portion 5e, a plurality of arc-shaped wall portions may be provided. The rotation shaft 5c protrudes upward beyond an upper end of the cylindrical portion 5e.

The blower fan 3 is fixed to the rotation shaft 5c, and rotates together with the rotation shaft 5c. Thus, a voltage applied to the body 5b of the motor 5 brings a turning force of the rotation shaft 5c to be transferred to the blower fan 3. This allows the portion of the blower fan 3 provided with the upper blades 30 to rotate inside the first air passage R1, and allows the portion of the blower fan 3 provided with the lower blades 31 to rotate inside the second air passage R2. The body 5b of the motor 5 is connected to an air-conditioning control apparatus (not shown), which applies a voltage to the body 5b so that the motor 5 rotates at an intended rotational speed.

### (Configuration of Blower Fan 3)

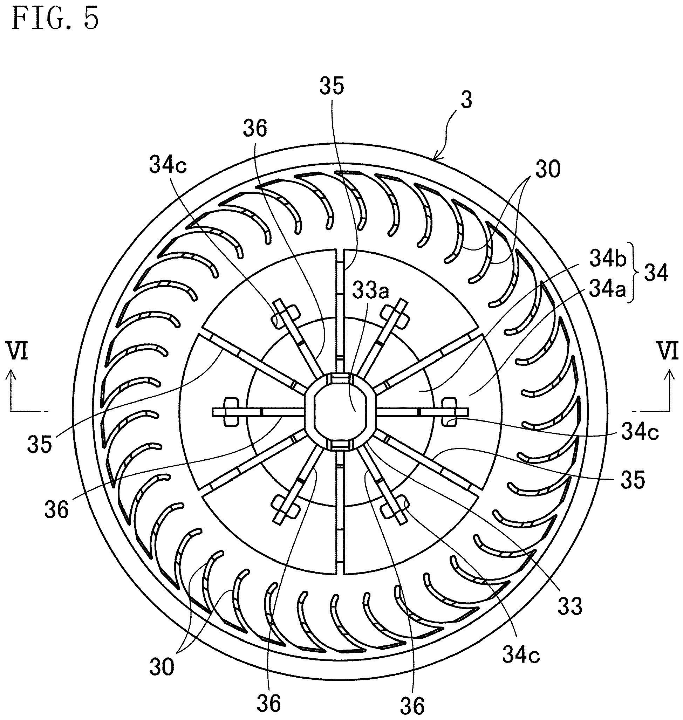

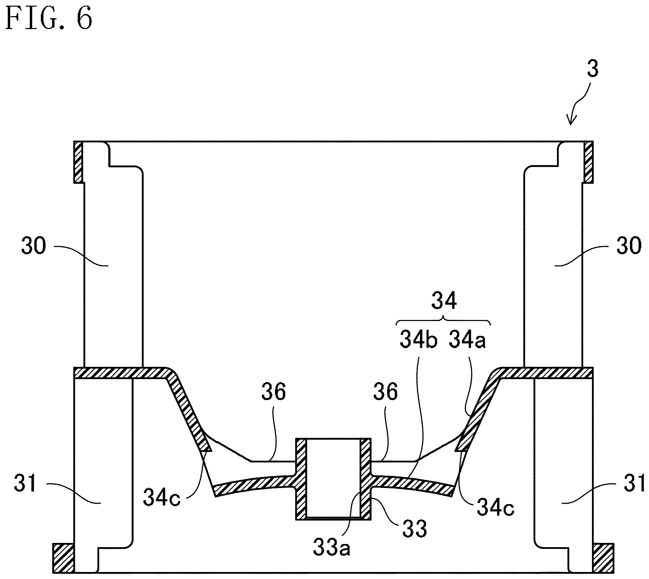

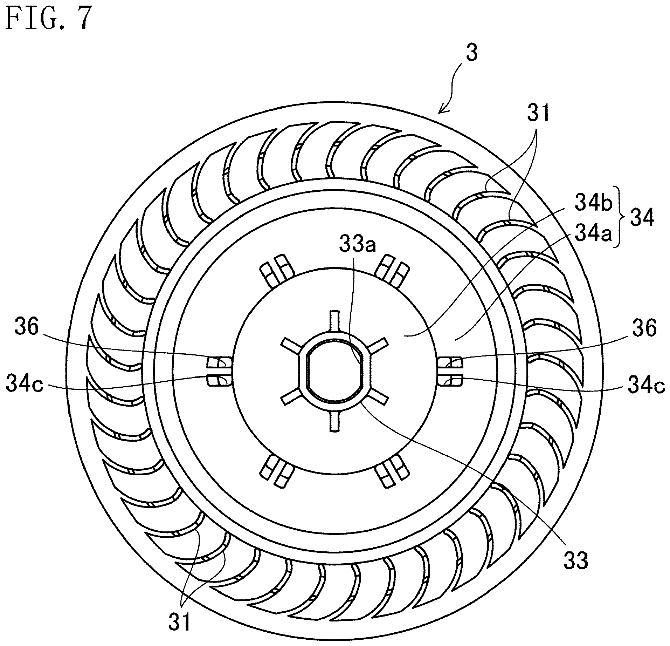

As illustrated in FIGS. 5 to 7, the blower fan 3 includes a fixed portion 33 fixed to the rotation shaft 5c of the motor 5, a cone portion 34 extending from the fixed portion 33 in a radial direction of the rotation shaft 5c, and many upper blades 30 and many lower blades 31 fixed to a radially outer portion of the cone portion 34. The fixed portion 33, the cone portion 34, and the upper and lower blades 30 and 31 may be an integrally molded product made of a resin material. However, they may be separate members combined together. The blower fan 3 is a centrifugal fan.

The fixed portion 33 is formed in the shape of a cylinder having an insertion hole 33a into which the rotation shaft 5c of the motor 5 is inserted. An upper portion of the fixed portion 33 protrudes upward from an upper surface of an inner peripheral portion 34b of the cone portion 34, and is thus positioned to protrude toward the inside of the cone portion 34. The insertion hole 33a of the fixed portion 33 extends in the top-to-bottom direction, and has upper and lower ends both opened. The rotation shaft 5c of the motor 5 is fixed while being inserted into the insertion hole 33a. A means to fix the fixed portion 33 to the rotation shaft 5c of the motor 5 has been known in the art. Thus, the means will not be described in detail.

The cone portion 34 is recessed downward. Specifically, the cone portion 34 has an outer peripheral portion 34a and the inner peripheral portion 34b, which are integrated together. The inner peripheral portion 34b extends radially outward from a vertically intermediate portion of the outer peripheral surface of the fixed portion 33, and is inclined or curved downward toward the radially outer end of the inner peripheral portion 34b. The outer peripheral portion 34a extends upward from the radially outer end of the inner peripheral portion 34b, and is inclined or curved radially outward toward the upper end of the outer peripheral portion 34a. The shapes of the outer and inner peripheral portions 34a and 34b are merely examples. The outer and inner peripheral portions 34a and 34b may be smoothly continuous, or may be continuous such that the boundary between the outer and inner peripheral portions 34a and 34b is clearly visible.

The outer and inner peripheral portions 34a and 34b form the cone portion 34 recessed downward. The cone portion 34 forms a shape that can also be referred to as a "bowl" shape or a "concave" shape, for example. An upper end portion of the outer peripheral portion 34a of the cone portion 34 extends radially outward. This extending portion extends in a direction substantially orthogonal to the rotation shaft 5c of the motor 5. Further, the lower end of the outer peripheral portion 34a is the lowest portion of the cone portion 34.

Lower end portions of the upper blades 30 are coupled to an upper surface of the extending portion of the outer peripheral portion 34a of the cone portion 34, and extend upward from the upper surface. Upper end portions of the lower blades 31 are coupled to a lower surface of the extending portion of the outer peripheral portion 34a of the cone portion 34, and extend downward from the lower surface. Rotation of the blower fan 3 allows air to be sucked from above the upper blades 30 to be blown radially out of the gap between each circumferentially adjacent pair of the upper blades 30, and allows air to be sucked from below the lower blades 31 to be blown radially out of the gap between each circumferentially adjacent pair of the lower blades 31.

The cone portion 34 has a plurality of drainage holes 34c through which water on an upper surface of the cone portion 34 is drained downward of the cone portion 34. The drainage holes 34c are formed at the lower end of the outer peripheral portion 34a of the cone portion 34, i.e., through the lowest portion of the cone portion 34, and are spaced apart from one another in the circumferential direction of the rotation shaft 5c. Further, the inner peripheral portion 34b can be inclined downward toward the radially outer end of the inner peripheral portion 34b, and is thus shaped to be inclined downward toward lower edge portions of the drainage holes 34c. This makes it easy for water on the upper surface of the inner peripheral portion 34b to flow toward the drainage holes 34c.

These drainage holes 34c can be arranged at regular intervals. The drainage holes 34c are apart upward from the upper end of the cylindrical portion 5e of the cover 5d, and are positioned radially outward of the cylindrical portion 5e. Thus, the drainage holes 34c are located outside the cylindrical portion 5e in a plan view.

As illustrated in FIG. 5, a plurality of first ribs 35 and a plurality of second ribs 36 that extend in the radial direction of the rotation shaft 5c are provided on the upper surface of the cone portion 34. The first and second ribs 35 and 36 are connected to the outer peripheral surface of the fixed portion 33, and also connected to the outer peripheral portion 34a of the cone portion 34. In other words, the first and second ribs 35 and 36 are reinforcing ribs that extend radially from the outer peripheral surface of the fixed portion 33 to the outer peripheral portion 34a of the cone portion 34, and can also be referred to as "coupling ribs" that couple the fixed portion 33 and the outer peripheral portion 34a together. The first ribs 35 are above the second ribs 36, and the radial dimension of each of the first ribs 35 is set to be greater than that of each of the second ribs 36. The first and second ribs 35 and 36 may have the same thickness, or may have different thicknesses. The first and second ribs 35 and 36 are alternately arranged in the circumferential direction of the rotation shaft 5c. The lower ends of the first and second ribs 35 and 36 are connected to the inner peripheral portion 34b of the cone portion 34. Thus, the fixed portion 33, the inner peripheral portion 34b of the cone portion 34, and the outer peripheral portion 34a of the cone portion 34 are coupled together through the first and second ribs 35 and 36 to be integrated together.

The second ribs 36 are respectively disposed to cross the drainage holes 34c. In a plan view, the second ribs 36 each pass through a central portion of an opening of an associated one of the drainage holes 34c in the width direction of the opening. As a result, each second rib 36 is disposed astride the associated drainage hole 34c, which is separated into two portions by the central portion of the opening of the associated drainage hole 34c in the width direction of the opening. Arranging the second ribs 36 as described above allows the openings of the associated drainage holes 34c to be positioned to be unclosed. The first ribs 35 are each spaced apart from the opening of an associated one of the drainage holes 34c. Thus, the first ribs 35 are also positioned to allow the openings of the associated drainage holes 34c to be unclosed. Note that both or either of the first ribs 35 or the second ribs 36 may be omitted.

The upper ends of the first and second ribs 35 and 36 are positioned below the lower ends of the upper blades 30. This makes it difficult for the first and second ribs 35 and 36 to hinder the air flows. Thus, a sufficient volume of air is allowed to flow.

The first ribs 35 are arranged at regular intervals in the circumferential direction of the rotation shaft 5c. The second ribs 36 are also arranged at regular intervals in the circumferential direction of the rotation shaft 5c. The intervals between adjacent ones of the first and second ribs 35 and 36 in the circumferential direction of the rotation shaft 5c are all set to be equal. Thus, the blower fan 3 is highly balanced while rotating.

### (Advantages of Embodiment)

As can be seen from the foregoing description, according to the vehicle air-conditioning air blower 1 of this embodiment, when the inside air inlets 2a and 2b are opened, and the outside air inlet 2c is closed by operations of the inside/outside air switching dampers 6 and 7, the vehicle air-conditioning air blower 1 operates in the inside-air circulation mode in which inside air is introduced through the inside air inlets 2a and 2b thereinto. In the inside-air circulation mode, the blower fan 3 rotating allows the inside air introduced through the inside air inlets 2a and 2b to flow through the first and second air passages R1 and R2 and to be then sent as air-conditioning air.

When the inside air inlets 2a and 2b are closed, and the outside air inlet 2c is opened by operations of the inside/outside air switching dampers 6 and 7, the vehicle air-conditioning air blower 1 operates in the outside-air introduction mode in which outside air is introduced through the outside air inlet 2c thereinto. In the outside-air introduction mode, the blower fan 3 rotating allows the outside air introduced through the outside air inlet 2c to flow through the first and second air passages R1 and R2 and to be then sent as air-conditioning air.

Further, if the inside air inlets 2a and 2b and the outside air inlet 2c are operated by operations of the inside/outside air switching dampers 6 and 7, the vehicle air-conditioning air blower 1 operates in the inside-outside air double flow mode. The blower fan 3 rotating allows the outside air introduced through the outside air inlet 2c to flow through the first air passage R1, and allows the inside air introduced through the inside air inlets 2a and 2b to flow through the second air passage R2. Thus, a combination of the outside air and the inside air is sent as air-conditioning air. In other words, the vehicle air-conditioning air blower 1 according to this embodiment can select an optional one of the outside-air introduction mode, the inside-air circulation mode, and the inside-outside air double flow mode, to send air in the selected mode.

For example, rainwater or car-washing water may enter the interior of the scroll casing 20 through the outside air inlet 2c. If water enters the interior of the scroll casing 20, the water may reach the upper surface of the cone portion 34 of the blower fan 3. If the water reaches the upper surface of the cone portion 34, which has the drainage holes 34c, the water is drained downward of the cone portion 34 through the drainage holes 34c. Thus, the water is less likely to remain accumulated on the upper surface of the cone portion 34. At this time, the water that has reached the upper surface of the cone portion 34 flows toward the lowest portion of the cone portion 34. However, since the lowest portion of the cone portion 34 has the drainage holes 34c, the water becomes much less likely to remain accumulated on the upper surface of the cone portion 34.

At this time, since the drainage holes 34c are located radially outward of the cylindrical portion 5e of the cover 5d, water dropped from the drainage holes 34c flows outside the cylindrical portion 5e. This reduces water entering the body 5b of the motor 5.

### (Other Embodiments - not part of the claimed invention)

The embodiments described above are mere examples in every respect, and shall not be interpreted in a limited manner.

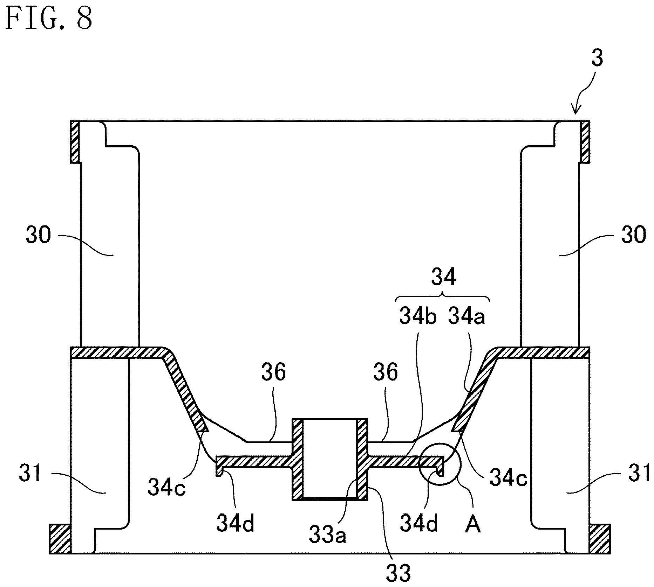

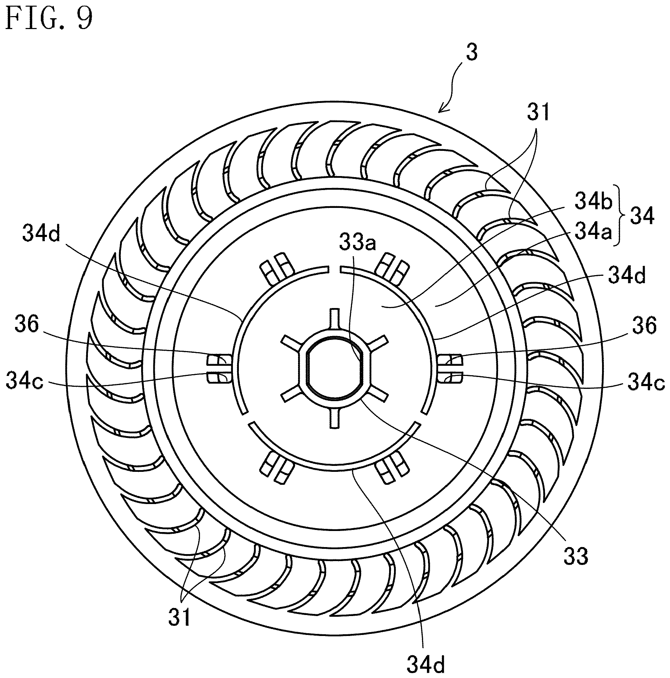

As in a first variation of the embodiment illustrated in FIGS. 8, 9, and 10A, a lower surface of a cone portion 34 may have a plurality of projections 34d each projecting downward from inner ends of associated ones of drainage holes 34c in a radial direction of the rotation shaft 5c. This makes it easy for water flowing downward from the drainage holes 34c to flow along the projections 34d. Since the projections 34d project from the inner ends of the associated drainage holes 34c in the radial direction of the rotation shaft 5c, water is less likely to flow in a direction that allows the water to be closer to the rotation shaft 5c. This reduces water entering the motor 5. The projections 34d extend in the circumferential direction of the rotation shaft 5c. The projections 34d can be arranged at regular intervals in the circumferential direction of the rotation shaft 5c. The projections 34d can also extend like an arc concentric with the rotation shaft 5c.

The projections 34d are each located directly below associated ones of the first and second ribs 35 and 36. Since the projections 34d extend circumferentially, each of the projections 34d is located at the same position as a portion of the cone portion 34 where an associated one of the first ribs 35 is formed and a portion of the cone portion 34 where an associated one of the second ribs 36 is formed. Further, each projection 34d overlaps with the associated first and second ribs 35 and 36 in the thickness direction (vertical direction) of the cone portion 34. This further improves the rigidity of the cone portion 34.

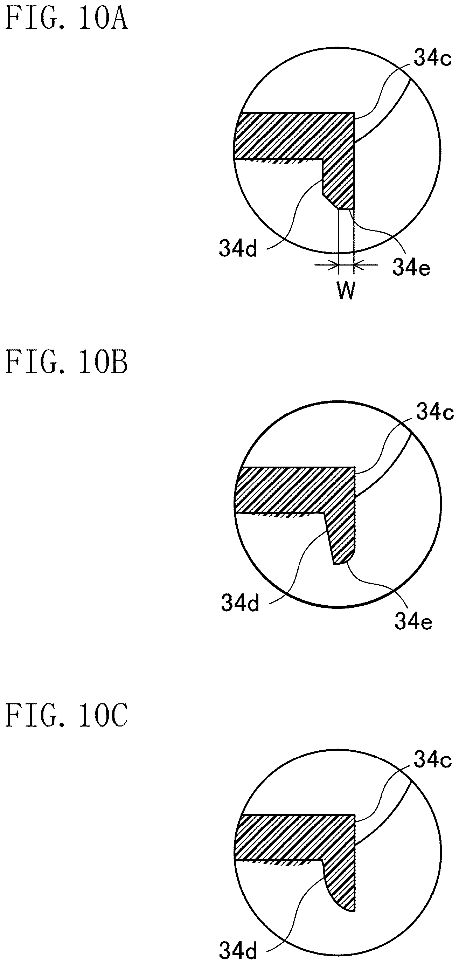

As illustrated in FIG. 10A, the width W of a lower end surface 34e of each projection 34d can be 1.0 mm or less. This facilitates dropping water that has flowed along the projection 34d to the lower end surface 34e.

As in a second variation of the embodiment illustrated in FIG. 10B, a lower end surface 34e of each of projections 34d may be curved.

As in a third variation of the embodiment illustrated in FIG. 10C, a lower portion of each of projections 34d may be pointed downward. The second and third variations also facilitate dropping water that has flowed along the projections 34d.

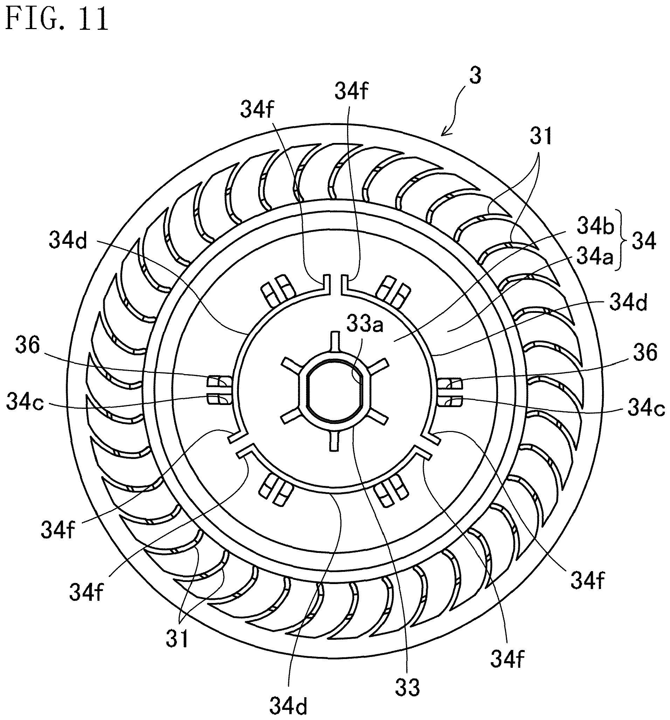

As in a fourth variation of the embodiment shown in FIG. 11, projections 34d may have ends each having a protruding portion 34f protruding radially outward. This can reduce water flowing radially inwardly from a space between each circumferentially adjacent pair of the projections 34d.

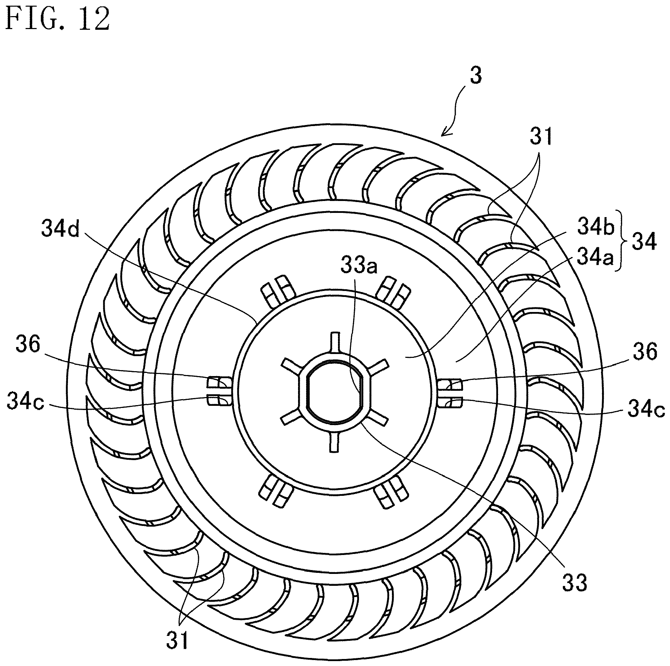

As in a fifth variation of the embodiment illustrated in FIG. 12, a ring-shaped projection 34d continuous in a circumferential direction of the rotation shaft 5c may be provided.

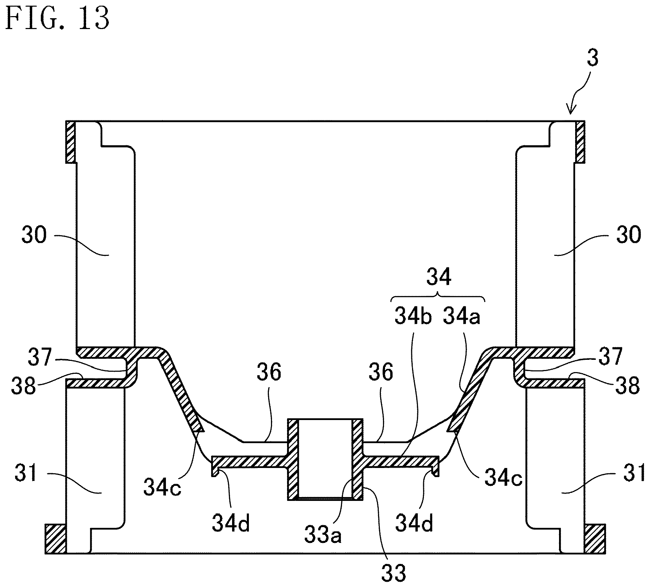

As in a sixth variation of the embodiment illustrated in FIG. 13, an outer peripheral portion 34a of a cone portion 34 of a blower fan 3 may have a vertical plate portion 37 and a horizontal plate portion 38. The vertical plate portion 37 extends downward from a lower surface of the outer peripheral portion 34a of the cone portion 34, and has a ring shape. The horizontal plate portion 38 extends radially outward from the lower end of the vertical plate portion 37. The upper ends of lower blades 31 are coupled to a lower surface of the horizontal plate portion 38.

### INDUSTRIAL APPLICABILITY

As can be seen from the foregoing description, a vehicle air-conditioning air blower according to the present invention may be used, for example, as an air blower unit for a vehicle air conditioner.

### DESCRIPTION OF REFERENCE CHARACTERS

- 1: Vehicle Air-Conditioning Air Blower
- 2: Blowing Casing
- 2a, 2b: Inside Air Inlet
- 2c: Outside Air Inlet
- 3: Blower Fan
- 5: Motor
- 5b: Body
- 5c: Rotation Shaft
- 5d: Cover
- 5e: Cylindrical Portion
- 20: Scroll Casing
- 30: Upper Blade (First Blade)
- 31: Lower Blade (Second Blade)
- 33: Fixed Portion
- 34: Cone Portion
- 34c: Drainage Hole
- 34d: Projection
- R1: First Air Passage
- R2: Second Air Passage

## Claims

1. An air-conditioning air blower (1) configured to be mounted in a vehicle comprising:
a casing (2) having an inside air inlet (2a, 2b) through which air in a cabin is introduced into the casing (2), and an outside air inlet (2c) through which air outside the cabin is introduced into the casing (2), the casing (2) housing an inside/outside air switching damper that opens and closes the inside air inlet (2a, 2b) and the outside air inlet (2c);
a blower fan (3) disposed in the casing (2); and
a motor (5) including a rotation shaft (5c) extending in a top-to-bottom direction,
the casing (2) having therein a first air passage (R1) and a second air passage (R2) each communicating with both of the inside air inlet (2a, 2b) and the outside air inlet (2c),
the blower fan (3) being disposed above the motor (5),
the blower fan (3) including a first blade (30) disposed in the first air passage (R1), and a second blade (31) disposed in the second air passage (R2), the first blade (30) being used to send air in the first air passage (R1) as air-conditioning air, the second blade (31) being used to send air in the second air passage (R2) as air-conditioning air,
the blower fan (3) including a fixed portion (33) fixed to the rotation shaft (5c), a cone portion (34) extending from the fixed portion (33) in a radial direction of the rotation shaft (5c), and the first blade (30) and the second blade (31) are fixed to a radially outer surface of the cone portion (34),
the cone portion (34) having an inner peripheral portion (34b) and an outer peripheral portion (34a), the inner peripheral portion (34b) extending radially outward from a vertically intermediate portion of the fixed portion (33), and being inclined or curved downward toward a radially outer end of the inner peripheral portion (34b), the outer peripheral portion (34a) extending upward from the radially outer end of the inner peripheral portion (34b), and being inclined or curved radially outward toward an upper end of the outer peripheral portion (34a), the inner peripheral portion (34b) and the outer peripheral portion (34a) forming the cone portion (34) recessed downward,
the lowest portion of the cone portion (34) having a drainage hole (34c) through which water on an upper surface of the cone portion (34) is drained downward of the cone portion (34), and
the cone portion (34) being inclined downward toward a lower edge portion of the drainage hole (34c).

2. The air-conditioning air blower (1) of claim 1, wherein
the motor (5) includes a body (5b), and a cover (5d) that covers the body (5b) from above,
the rotation shaft (5c) passes through the cover (5d) to protrude upward from an upper end of the body (5b),
the cover (5d) has a cylindrical portion (5e) surrounding the rotation shaft (5c), and
the drainage hole (34c) is apart upward from an upper end of the cylindrical portion (5e), and is positioned radially outward of the cylindrical portion (5e).

3. The air-conditioning air blower (1) of claim 1 or 2, wherein
the cone portion (34) is provided with a rib (36) extending in the radial direction of the rotation shaft (5c), and
the rib (36) crosses the drainage hole (34c).

## Patentansprüche

1. Gebläsevorrichtung zur Klimatisierung (1), die zur Montage in einem Fahrzeug konfiguriert ist, umfassend:
ein Gehäuse (2) mit einem Innenlufteinlass (2a, 2b), durch den Luft innerhalb einer Kabine in das Gehäuse (2) eingeführt wird, und einem Außenlufteinlass (2c), durch den Luft außerhalb der Kabine in das Gehäuse (2) eingeführt wird, wobei das Gehäuse (2) eine Innenluft-/Außenluft-Schalteinheit beherbergt, die den Innenlufteinlass (2a, 2b) und den Außenlufteinlass (2c) öffnet und schließt;
einen im Gehäuse (2) angeordneten Gebläselüfter (3); und
einen Motor (5), der eine Drehwelle (5c) enthält, die sich in einer Richtung von oben nach unten erstreckt,
wobei das Gehäuse (2) darin einen ersten Luftdurchlass (R1) und einen zweiten Luftdurchlass (R2) aufweist, die jeweils sowohl mit dem Innenlufteinlass (2a, 2b) und dem Außenlufteinlass (2c) kommunizieren,
wobei der Gebläselüfter (3) über dem Motor (5) angeordnet ist,
wobei der Gebläselüfter (3) ein im ersten Luftdurchlass (R1) angeordnetes erstes Blatt (30) und ein im zweiten Luftdurchlass (R2) angeordnetes zweites Blatt (31) enthält, wobei das erste Blatt (30) genutzt wird, um Luft als Klimatisierungsluft in den ersten Luftdurchlass (R1) zu senden, das zweite Blatt (31) genutzt wird, um Luft als Klimatisierungsluft in den zweiten Luftdurchlass (R2) zu senden,
wobei der Gebläselüfter (3) einen festen Abschnitt (33), der an der Drehwelle (5c) befestigt ist, einen Konusabschnitt (34), der sich vom festen Abschnitt (33) in einer Radialrichtung der Drehwelle (5c) erstreckt, enthält, und das erste Blatt (30) und das zweite Blatt (31) an einer radial äußeren Oberfläche des Konusabschnitts (34) befestigt sind,
wobei der Konusabschnitt (34) einen Innenumfangsabschnitt (34b) und einen Außenumfangsabschnitt (34a) aufweist, wobei sich der Innenumfangsabschnitt (34b) von einem vertikalen Zwischenabschnitt des festen Abschnitts (33) radial nach außen erstreckt und zu einem radial äußeren Ende des Innenumfangsabschnitts (34b) nach unten geneigt oder gekrümmt ist, sich der Außenumfangsabschnitt (34a) vom radial äußeren Ende des Innenumfangsabschnitt (34b) nach oben erstreckt und zu einem oberen Ende des Außenumfangsabschnitts (34a) geneigt oder radial nach außen gekrümmt ist, wobei der Innenumfangsabschnitt (34b) und der Außenumfangsabschnitt (34a) den nach unten zurückversetzten Konusabschnitt (34) bilden,
wobei der unterste Abschnitt des Konusabschnitts (34) ein Abflussloch (34c) aufweist, durch das Wasser auf einer oberen Oberfläche des Konusabschnitts (34) vom Konusabschnitt (34) nach unten abgelassen wird, und
wobei der Konusabschnitt (34) zu einem unteren Randabschnitt des Abflusslochs (34c) nach unten geneigt ist.

2. Gebläsevorrichtung zur Klimatisierung (1) nach Anspruch 1, wobei
der Motor (5) einen Körper (5b) und eine Abdeckung (5d) enthält, die den Körper (5b) von oben abdeckt,
die Drehwelle (5c) durch die Abdeckung (5d) läuft, um von einem oberen Ende des Körpers (5b) nach oben vorzuragen,
die Abdeckung (5d) einen zylindrischen Abschnitt (5e) aufweist, der die Drehwelle (5c) umgibt, und
das Abflussloch (34c) von einem oberen Ende des zylindrischen Abschnitts (5e) aufwärts getrennt ist und radial außerhalb des zylindrischen Abschnitts (5e) positioniert ist.

3. Gebläsevorrichtung zur Klimatisierung (1) nach Anspruch 1 oder 2, wobei
der Konusabschnitt (34) mit einer Rippe (36) versehen ist, die sich in Radialrichtung der Drehwelle (5c) erstreckt, und
die Rippe (36) das Abflussloch (34c) überquert.

## Revendications

1. Ventilateur de climatisation (1) configurée pour être montée dans un véhicule comprenant :
un boîtier (2) ayant une entrée d'air intérieur (2a, 2b) à travers laquelle l'air dans un habitacle est introduit dans le boîtier (2), et une entrée d'air extérieur (2c) à travers laquelle l'air à l'extérieur de l'habitacle est introduit dans le boîtier (2), le boîtier (2) logeant un registre de commutation d'air intérieur/extérieur qui ouvre et ferme l'entrée d'air intérieur (2a, 2b) et l'entrée d'air extérieur (2c) ;
un ventilateur soufflant (3) disposé dans le boîtier (2) ; et
un moteur (5) comprenant un arbre de rotation (5c) s'étendant dans une direction de haut en bas,
le boîtier (2) ayant à l'intérieur un premier passage d'air (R1) et un deuxième passage d'air (R2) communiquant chacun à la fois avec l'entrée d'air intérieur (2a, 2b) et l'entrée d'air extérieur (2c),
le ventilateur soufflant (3) étant disposé au-dessus du moteur (5),
le ventilateur soufflant (3) comprenant une première pale (30) disposée dans le premier passage d'air (R1), et une deuxième pale (31) disposée dans le deuxième passage d'air (R2), la première pale (30) étant utilisée pour envoyer de l'air dans le premier passage d'air (R1) comme air de climatisation, la deuxième pale (31) étant utilisée pour envoyer de l'air dans le deuxième passage d'air (R2) comme air de climatisation,
le ventilateur soufflant (3) comprenant une partie fixe (33) fixée à l'arbre de rotation (5c), une partie conique (34) s'étendant depuis la partie fixe (33) dans une direction radiale de l'arbre de rotation (5c), et la première pale (30) et la deuxième pale (31) sont fixées à une surface radialement extérieure de la partie conique (34),
la partie conique (34) ayant une partie périphérique interne (34b) et une partie périphérique externe (34a), la partie périphérique interne (34b) s'étendant radialement vers l'extérieur depuis une partie verticalement intermédiaire de la partie fixe (33), et étant inclinée ou incurvée vers le bas vers une extrémité radialement externe de la partie périphérique interne (34b), la partie périphérique externe (34a) s'étendant vers le haut depuis l'extrémité radialement externe de la partie périphérique interne (34b), et étant inclinée ou incurvée radialement vers l'extérieur vers une extrémité supérieure de la partie périphérique externe (34a), la partie périphérique interne (34b) et la partie périphérique externe (34a) formant la partie conique (34) en retrait vers le bas,
la partie la plus basse de la partie conique (34) ayant un trou de drainage (34c) à travers lequel l'eau sur une surface supérieure de la partie conique (34) est drainée vers le bas de la partie conique (34), et
la partie conique (34) étant inclinée vers le bas vers une partie de bord inférieur du trou de drainage (34c).

2. Ventilateur de climatisation (1) selon la revendication 1, dans laquelle
le moteur (5) comprend un corps (5b), et un capot (5d) qui recouvre le corps (5b) par le dessus,
l'arbre de rotation (5c) traverse le capot (5d) pour faire saillie vers le haut d'une extrémité supérieure du corps (5b),
le capot (5d) a une partie cylindrique (5e) entourant l'arbre de rotation (5c), et
le trou de drainage (34c) est éloigné vers le haut depuis une extrémité supérieure de la partie cylindrique (5e), et est positionné radialement vers l'extérieur de la partie cylindrique (5e).

3. Ventilateur de climatisation (1) selon la revendication 1 ou 2, dans laquelle
la partie conique (34) est pourvue d'une nervure (36) s'étendant dans la direction radiale de l'arbre de rotation (5c), et
la nervure (36) traverse le trou de drainage (34c).
